# FASCICULE DE BREVET EUROPEEN

(11) **EP 1 645 004 B1**
(45) Date de publication et mention de la délivrance du brevet: **17.07.2013**
(21) Numéro de dépôt: 04767404.9
(22) Date de dépôt: 21.06.2004
(51) Int. Cl.: H01M 8/02, H01M 8/10

(54) **PILE A COMBUSTIBLE COMPORTANT DES COLLECTEURS DE COURANT INTEGRES A L'EMPILEMENT ELECTRODE-MEMBRANE-ELECTRODE**
BRENNSTOFFZELLE MIT IN DEN STAPEL AUS ELEKTRODE/MEMBRAN/ELEKTRODE INTEGRIERTEN STROMKOLLEKTOREN
FUEL CELLS COMPRISING CURRENT COLLECTORS INTEGRATED IN THE ELECTRODE/MEMBRANE/ELECTRODE STACK

(30) Priorité: 01.07.2003 FR 0307967
(43) Date de publication de la demande: 12.04.2006
(73) Titulaire: Commissariat à l'Énergie Atomique et aux Énergies Alternatives, 75015 Paris (FR)
(72) Inventeur: LAURENT, Jean-Yves, 386 40 Claix (FR); MARSACQ, Didier, F-38210 Montaud (FR); NAYOZE, Christine, F-38600 Fontaine (FR); ROUX, Christel, F-38210 Saint Quentin sur Isere (FR); CARDOT, Françis, 2000 Neuchatel (CH)
(74) Mandataire: Hecké, Gérard
(86) Numéro de dépôt international: PCT/FR2004/001548
(87) Numéro de publication internationale: WO 2005/015669

(56) Documents cités:
- EP-A- 1 434 297
- US-A1- 2002 122 972
- STANLEY K G ET AL: "Fabrication of a micromachined direct methanol fuel cell" 12 mai 2002 (2002-05-12), IEEE CANADIAN CONFERENCE ON ELECTRICAL AND COMPUTER ENGINEERING. CCECE 2002. WINNIPEG, MANITOBA, CANADA, MAY 12 - 15, 2002, CANADIAN CONFERENCE ON ELECTRICAL AND COMPUTER ENGINEERING, NEW YORK, NY : IEEE, US, PAGE(S) 450-454 , XP002271656 ISBN: 0-7803-7514-9 abrégé; figures 3,4

## Description

### Domaine technique de l'invention

L'invention concerne une pile à combustible comportant :
- un empilement comprenant une première électrode, une membrane électrolytique munie de faces avant et arrière et une seconde électrode,
- et des premier et second collecteurs de courant intégrés à l'empilement et correspondant respectivement aux première et seconde électrodes, chaque collecteur de courant comportant un dépôt métallique et étant muni d'une pluralité de passages transversaux pour un fluide.

### État de la technique

Les piles à combustible, de type piles à combustible à membrane échangeuse de protons, (par exemple « PEMFC » ou Proton Exchange Membrane Fuel Cell » ou échangeuse d'anions OH⁻) comportent généralement un grand nombre de cellules élémentaires disposées en série et comportant chacune un empilement comprenant une anode et une cathode séparées par une membrane électrolytique. L'empilement est disposé entre deux plaques collectrices de courant et il est généralement appelé un empilement de type « EME » (Electrode-Membrane-Electrode). L'ensemble des cellules élémentaires forme un assemblage de type filtre-presse.

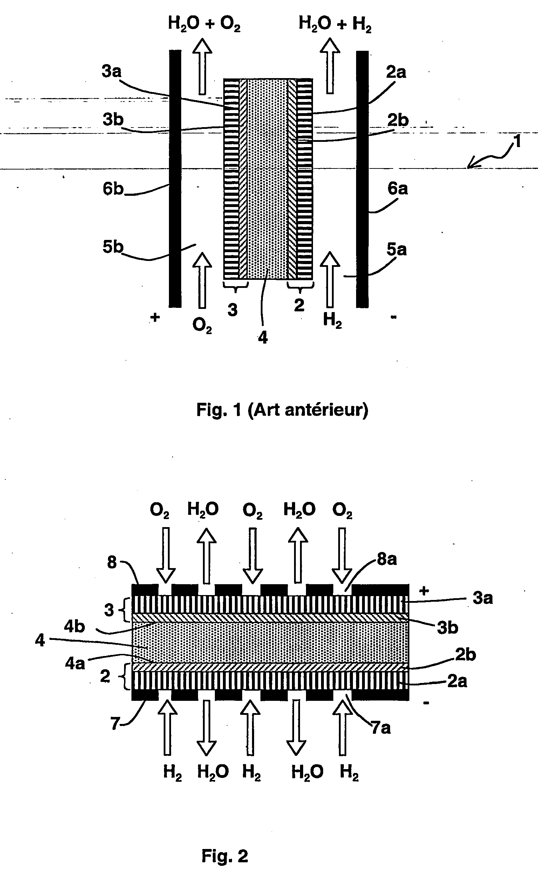

Ainsi comme représentée à la figure 1, une cellule élémentaire 1 comporte une anode 2, une cathode 3 et une membrane électrolytique 4 disposée entre les deux électrodes. Dans le cas d'une pile PEMFC, l'anode 2 est le siège d'une réaction dont le réactif est l'hydrogène tandis qu'une réaction entre les protons H⁺ formés à l'anode 2 et de l'oxygène se produit à la cathode 3 pour former de l'eau. La membrane électrolytique 4 est destinée à laisser passer les protons H⁺ de l'anode 2 vers la cathode 3.

L'anode 2 et la cathode 3 sont respectivement alimentées en hydrogène et en oxygène, via des canaux de circulation 5a et 5b connectés à des sources de réactif qui peuvent être, d'une part de l'hydrogène pur ou des hydrocarbures reformés ou non pour la source d'hydrogène et, d'autre part de l'oxygène pur ou de l'air pour la source d'oxygène. Les canaux de circulation 5a et 5b sont respectivement délimités par la face externe de l'anode et de la cathode et par la paroi interne de plaques 6a et 6b destinées à collecter le courant. Les plaques 6a et 6b sont généralement des plaques bipolaires qui enserrent l'empilement EME.

Chacune des électrodes est constituée par une couche de diffusion 2a et 3a et une couche catalytique 2b et 3b. Ainsi, chaque couche de diffusion 2a ou 3b permet le passage de fluides, c'est-à-dire de l'oxygène, de l'hydrogène et de l'eau, entre un canal de circulation 5a ou 5b et la couche catalytique 2a et 3a de l'électrode correspondante. Les réactions électrochimiques ont lieu au niveau des couches catalytiques de l'anode et de la cathode.

L'emploi des plaques collectrices de courant 6a et 6b est indispensable au bon fonctionnement de la pile à combustible. Cependant les plaques collectrices de courant peuvent altérer de façon significative la densité d'énergie massique et volumique accessible de la pile. De plus, un tel assemblage est encombrant et son volume ne peut pas être facilement réduit. Or, dans certaines applications telles que celles destinées à fournir de l'énergie à des équipements portables, les piles à combustible doivent être peu encombrantes tout en conservant leurs performances.

La demande de brevet EP-A2-1282185 propose, alors, de réaliser une pile à combustible à géométrie cylindrique, à partir d'un substrat dont au moins un composant est destiné à être éliminé et servant de support aux dépôts successifs d'un premier collecteur de courant, d'un empilement comprenant une première électrode, une membrane électrolytique et une seconde électrode et d'un second collecteur de courant. Les première et seconde électrodes comportent chacune une couche de diffusion et un catalyseur tandis que les premier et second collecteurs de courant peuvent être éventuellement sous forme d'un maillage de tissu métallique. La réalisation d'une telle pile à combustible est, cependant, peu pratique à mettre en oeuvre.

### Objet de l'invention

L'invention a pour but de réaliser une pile à combustible remédiant aux inconvénients de l'art antérieur et ayant, notamment, des densités d'énergie accrues tout en étant capable d'alimenter facilement en fluide au moins un des composants de l'empilement électrode-membrane-électrode. Plus particulièrement, l'invention a également pour but de réaliser une pile à combustible peu encombrante et pouvant être miniaturisée, en utilisant notamment les techniques de fabrication de la microtechnologie.

Selon l'invention, ce but est atteint par le fait que les premier et second collecteurs de courant sont respectivement disposés sur les faces avant et arrière de la membrane électrolytique, entre la membrane électrolytique et l'électrode correspondante.

Selon un premier développement de l'invention, les premier et second collecteurs de courant sont chacun structurés sous la forme d'une grille.

Selon un second développement de l'invention, les premier et second collecteurs de courant sont chacun structurés sous la forme d'un peigne.

Selon un troisième développement de l'invention, les premier et second collecteurs de courant sont poreux, les passages transversaux étant constitués par les pores des collecteurs de courant.

Selon un mode de réalisation préférentiel, les premier et second collecteurs de courant comportent chacun une alternance de zones poreuses et de zones non poreuses, les passages transversaux étant constitués par les pores des zones poreuses.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique, en coupe, d'une cellule élémentaire d'une pile à combustible selon l'art antérieur.
La figure 2 est une représentation schématique, en coupe, d'un mode particulier de réalisation d'une pile à combustible.
Les figures 3 à 10 illustrent différentes étapes de réalisation d'une pile à combustible selon l'invention.
Les figures 11 et 12 représentent, en vue de dessus, des premier et second modes de réalisation d'un collecteur de courant d'une pile à combustible selon l'invention.

### Description de modes particuliers de réalisation.

L'enseignement de la demande de brevet EP-A2-1282185 pourrait, éventuellement, être appliqué à des piles à combustible ayant une géométrie non cylindrique, par exemple à une pile à combustible comportant un empilement Electrode-Membrane-Electrode, noté empilement EME et constitué de couches planes.

Ainsi, comme représentée à la figure 2, une pile à combustible peut comporter un empilement EME constitué de couches planes. L'empilement comporte, ainsi, une membrane électrolytique 4 munie de faces avant et arrière 4a et 4b. sur lesquelles sont respectivement disposées des première et seconde couches catalytiques 2b et 3b, respectivement recouvertes par une couche de diffusion 2a et 3a. La première couche catalytique 2b et la première couche de diffusion 2a forment l'anode 2 tandis que la seconde couche catalytique 3b et la seconde couche de diffusion 3a forment la cathode 3.

Des premier et second collecteurs de courant 7 et 8 sont intégrés à l'empilement EME, c'est-à-dire que l'empilement EME et les premier et second collecteurs de courant 7 et 8 forment un même ensemble intégré. A la figure 2, les premier et second collecteurs 7 et 8 sont respectivement disposés sur les faces externes des première et seconde couches de diffusion 2a et 3a de l'anode 2 et de la cathode 3. Ils sont chacun constitués par un dépôt métallique comportant une pluralité de passages transversaux 7a et 8a destinés à permettre le passage d'un fluide vers une couche de diffusion. Ainsi, l'hydrogène peut passer à travers les passages transversaux 7a du collecteur de courant anodique 7 pour atteindre la couche de diffusion 2a de l'anode 2 et l'oxygène passe à travers les passages transversaux 8a du collecteur de courant cathodique 8 pour atteindre la couche de diffusion 3a de la cathode 3. De même, l'eau produite au cours du fonctionnement de la pile à combustible est évacuée par les mêmes passages transversaux 7a et 8a.

Ce type de structure intégrée permet de collecter les électrons formés lors des réactions électrochimiques ayant lieu au niveau des couches catalytiques, tout en favorisant la diffusion des fluides réactifs ou des fluides formés, sans apport d'énergie extérieure telle que l'emploi d'un ventilateur, par exemple. Grâce au nombre et à la répartition des passages transversaux, le fluide peut pénétrer sur la totalité de la couche de diffusion et donc réagir sur une large surface de la couche catalytique. Ceci permet, notamment, d'améliorer le rendement de la réaction-électrochimique.

De plus, l'intégration des collecteurs de courant sur l'empilement permet de faire circuler les électrons formés lors de la réduction de l'hydrogène sur une distance très courte entre un collecteur de courant et la couche catalytique de l'électrode correspondante. La distance parcourue par les électrons étant de l'ordre de quelques micromètres, elle évite des pertes ohmiques dues au niveau de conductivité électrique des matériaux constituant les électrodes lorsque celles-ci ne sont pas comprimées par un dispositif de type filtre-presse. La conductivité électrique des électrodes est généralement de l'ordre de 1 S/cm à 10S/cm.

Cependant, une telle intégration des collecteurs de courant peut provoquer une altération des électrodes et donc réduire les performances de la pile à -combustible. Ainsi, selon l'invention, cet inconvénient est surmonté par le fait que les premiers et second collecteurs de courant comportant un dépôt métallique et munis de passages transversaux sont respectivement disposés sur les faces avant et arrière de la membrane électrolytique, entre la membrane électrolytique et l'électrode correspondante. Les collecteurs de courant sont, de préférence, constitués par un métal choisi parmi les métaux nobles et le métal est, plus particulièrement, de l'or ou du platine dans le cas d'une pile à combustible acide et du nickel dans le cas d'une pile à combustible basique. De plus, les éléments catalytiques des électrodes restent en contact direct avec la membrane électrolytique de l'empilement, à travers les passages transversaux formés dans les collecteurs de courant.

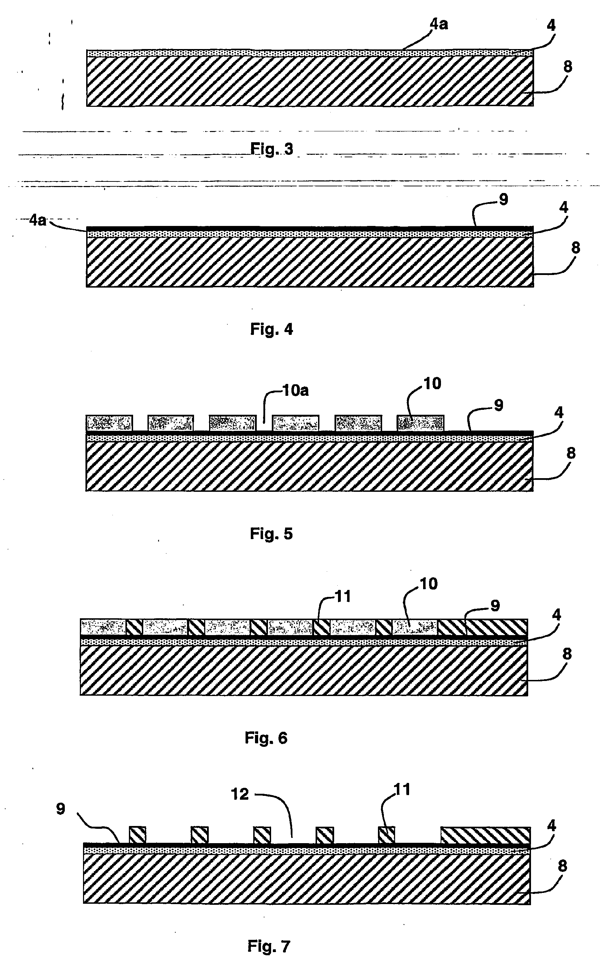

Selon un procédé particulier de réalisation d'une pile à combustible, tel que représenté aux figures 3 à 10, une membrane électrolytique 4 est déposée sur un substrat 8 (figure 3), sous la forme d'une couche de polymère perfluoré de type Nafion®. Une couche métallique 9, de préférence en or, en alliage chrome- or ou en alliage titane-or, est ensuite déposée sur la face avant 4a de la membrane électrolytique 4 par évaporation (figure 4).

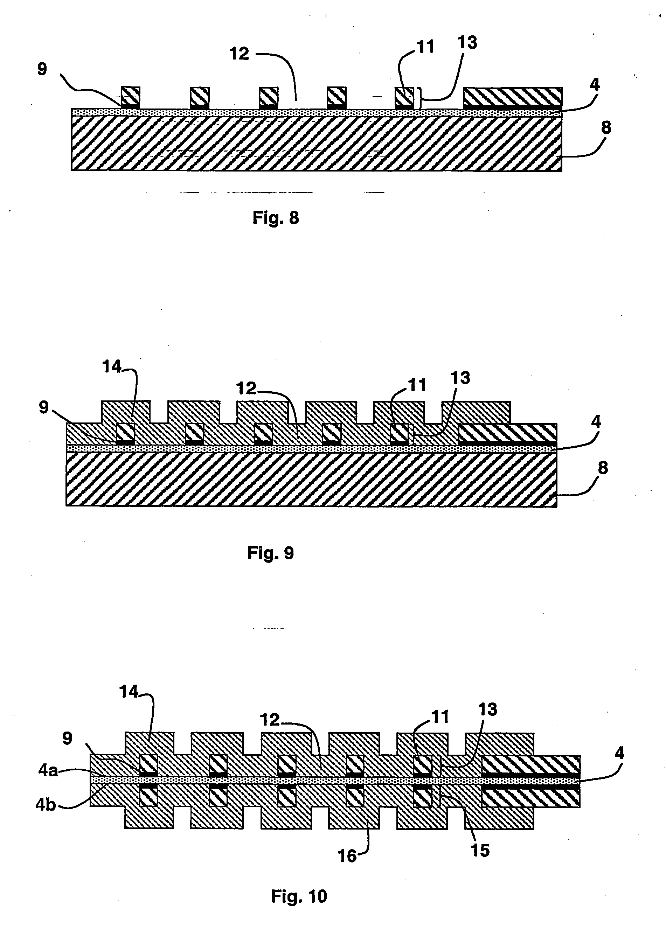

Puis, une étape de photolithographie est réalisée de manière à former un masque 10 en matériau photoréticulable sur la couche métallique (figure 5). Le masque 10 comporte des cavités 10a dans lesquelles est réalisé un dépôt galvanique, par exemple en or ou en cuivre, (figure 6). Ainsi, le dépôt galvanique comporte des parties en relief 11 correspondant à la partie complémentaire des cavités 10a. Une fois le matériau photoréticulable retiré (figure 7), la couche métallique 9 est gravée (figure 8) de sorte qu'elle comporte des passages transversaux 12 et qui sont destinés à permettre le passage des protons de l'anode vers la membrane électrolytique 4 ou de la membrane électrolytique 4 vers la cathode.

Les parties en relief 11 du dépôt galvanique sont, ainsi, respectivement superposées aux bordures des passages transversaux 12 de la couche métallique 9 et l'ensemble forme un premier collecteur de courant 13. Un élément catalytique 14, formant une première électrode, est alors déposé sous forme d'une couche mince, sur la surface de l'ensemble formé par la membrane électrolytique 4 et le premier collecteur de courant 13. Il comble alors les passages transversaux 12 du premier collecteur de courant 13, de manière à être en contact direct avec la membrane électrolytique 4, à travers les passages transversaux. De plus, il recouvre les parties en relief 11. L'ensemble constitue, alors, une demi-pile à combustible.

Le reste de la pile à combustible est, ensuite, formé en retirant le substrat 8, de manière à libérer la face arrière de la membrane électrolytique. L'ensemble formé par la membrane électrolytique 4, le premier collecteur 13 et la première électrode 14 est, ensuite, retourné, après avoir été éventuellement recouvert par une couche de protection. Puis, comme illustré à la figure 10, un second collecteur de courant 15 et une seconde électrode 16 sont formés, sur la face arrière 4b de la membrane électrolytique 4, de manière identique au premier collecteur de courant13 et à la première électrode 14. L'élément catalytique de la seconde électrode 16 comble alors les passages transversaux formés dans le second collecteur de courant 15, de manière à être en contact direct avec la face arrière 4b de la membrane électrolytique 4 et il recouvre le second collecteur de courant 15.

Le fait d'intégrer les collecteurs de courant à un empilement EME permet, notamment, d'utiliser les techniques de dépôt connues dans le domaine de la microtechnologie, et donc de réaliser des piles à combustibles miniatures et de manière plus rapide. Par ailleurs, une pile à combustible comportant des collecteurs de courant munis de passages transversaux et disposés sur les faces avant et arrière de la membrane électrolytique présente des caractéristiques électrochimiques intrinsèques équivalentes à celles des piles du type fittre-presse. Elle a, cependant, une densité d'énergie volumique ou massique beaucoup plus élevée et elle est beaucoup moins encombrante.

La réalisation des électrodes sur les collecteurs de courant simplifie également le procédé de fabrication d'une telle pile à combustible. En effet, le fait de disposer les électrodes sur les collecteurs de courant est avantageux pour la fabrication de la pile à combustible car, l'élément catalytique des électrodes étant plus fragile que le collecteur de courant, il est plus facile de déposer les éléments fragiles sur les éléments plus solides que l'inverse. Cela permet également d'obtenir une pile à combustible plus robuste, l'épaisseur des éléments catalytiques n'étant plus limitée par les collecteurs de courant.

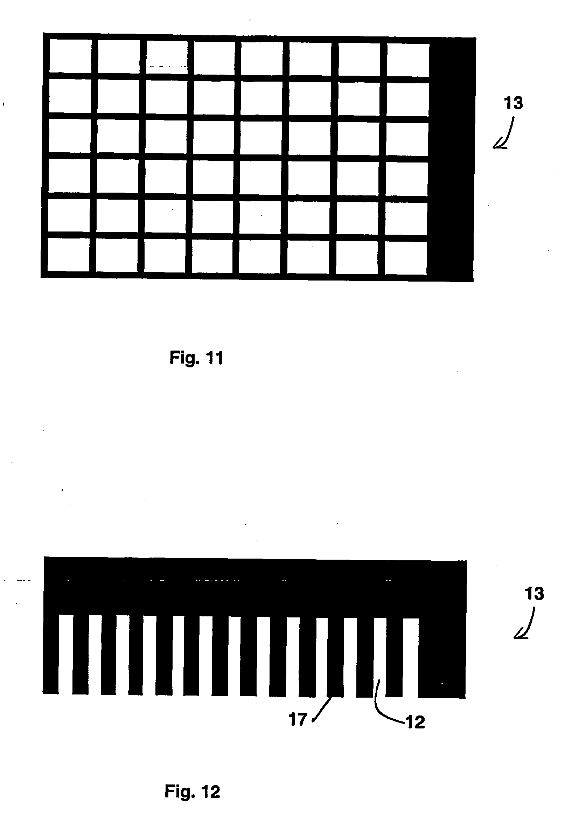

L'invention n'est pas limitée à un mode particulier de réalisation. Ainsi, la pile à combustible peut comporter une pluralité d'empilement EME avec des collecteurs de courant intégrés. La pile à combustible peut être de forme quelconque, par exemple cylindrique. Les collecteurs de courant peuvent également de forme quelconque, avec des passages transversaux des collecteurs de courant disposés de manière à assurer la continuité du passage du courant dans les collecteurs de courant. Ainsi, comme représentés aux figures 11 et 12, les collecteurs de courant peuvent être structurés sous la forme d'une grille (figure 11) ou sous la forme d'un peigne (figure 12). A titre d'exemple, dans le cas d'un collecteur de courant 13 sous forme de peigne, les passages transversaux 12 sont formés entre des branches 17 du peigne. De plus, le nombre et la répartition des passages transversaux permettent de conserver une surface de réaction élevée entre l'élément catalytique et la membrane électrolytique.

Les collecteurs de courant sont réalisés par tout type de méthodes connues pour réaliser des couches minces. Ils peuvent, notamment, être réalisés par dépôt physique en phase vapeur (PVD ou « Physical Vapour Deposition), par dépôt chimique en phase vapeur (CVD ou « Chemical Vapour Deposition), par sérigraphie ou par dépôt électrochimique. Les collecteurs de courant peuvent également être uniformément poreux ou bien ils peuvent comporter une alternance de zones poreuses et de zones non poreuses, les pores jouant, dans les deux cas, le rôle des passages transversaux des collecteurs de courant.

## Revendications (Revendications pour l'(les) Etat(s) contractant(s) suivant(s): DE, FR, GB, NL)

1. Pile à combustible comportant :
- un empilement comprenant une première électrode (14), une membrane électrolytique (4) munie de faces avant et arrière (4a, 4b) et une seconde électrode (16),
- et des premier et second collecteurs de courant (13, 15) intégrés à l'empilement et correspondant respectivement aux première et seconde électrodes (14, 16), chaque collecteur de courant comportant un dépôt métallique et étant muni d'une pluralité de passages transversaux pour un fluide,
pile **caractérisée en ce que** les premier et second collecteurs de courant (13, 15) sont respectivement disposés sur les faces avant et arrière (4a, 4b) de la membrane électrolytique (4), entre la membrane électrolytique (4) et l'électrode correspondante (14, 16) et **en ce que** les premier et second collecteurs de courant (13, 15) sont poreux, les passages transversaux étant constitués par les pores des collecteurs de courant (13, 15).

2. Pile à combustible selon la revendication 1, **caractérisée en ce que** les premier et second collecteurs de courant (13, 15) sont chacun structurés sous la forme d'une grille.

3. Pile à combustible selon la revendication 1, **caractérisée en ce que** les premier et second collecteurs de courant (13, 15) sont chacun structurés sous la forme d'un peigne.

4. Pile à combustible selon l'une quelconque des revendications 1 à 3, **caractérisée en ce que** le métal des premier et second collecteurs de courant (13, 15) est choisi parmi les métaux nobles.

## Revendications (Revendications pour l'(les) Etat(s) contractant(s) suivant(s): AT, BE, BG, CH, CY, CZ, DK, EE, ES, FI, GR, HU, IE, IT, LI, LU, MC, PL, PT, RO, SE, SI, SK, TR)

1. Pile à combustible comportant :
- un empilement comprenant une première électrode (14), une membrane - électrolytique (4) munie de faces avant et arrière (4a, 4b) et une seconde électrode (16),
- et des premier et second collecteurs de courant (13, 15) intégrés à l'empilement et correspondant respectivement aux première et seconde électrodes (14, 16), chaque collecteur de courant comportant un dépôt métallique et étant muni d'une pluralité de passages transversaux pour un fluide,
pile **caractérisée en ce que** les premier et second collecteurs de courant (13, 15) sont respectivement disposés sur les faces avant et arrière (4a, 4b) de la membrane électrolytique (4), entre la membrane électrolytique (4) et l'électrode correspondante (14, 16).

2. Pile à combustible selon la revendication 1, **caractérisée en ce que** les premier et second collecteurs de courant (13, 15) sont chacun structurés sous la forme d'une grille.

3. Pile à combustible selon la revendication 1, **caractérisée en ce que** les premier et second collecteurs de courant (13, 15) sont chacun structurés sous la forme d'un peigne.

4. Pile à combustible selon l'une quelconque des revendications 1 à 3, **caractérisée en ce que** les premier et second collecteurs de courant (13, 15) sont poreux, les passages transversaux étant constitués par les pores des collecteurs de courant (13, 15).

5. Pile à combustible selon l'une quelconque des revendications 1 à 3, **caractérisée en ce que** les premier et second collecteurs de courant (13, 15) comportent chacun une alternance de zones poreuses et de zones non poreuses, les passages transversaux étant constitués par les pores des zones poreuses.

6. Pile à combustible selon l'une quelconque des revendications 1 à 5, **caractérisée en ce que** le métal des premier et second collecteurs de courant (13, 15) est choisi parmi les métaux nobles.

## Patentansprüche (Patentansprüche für folgende(n) Vertragsstaat(en): DE, FR, GB, NL)

1. Brennstoffzelle, die umfasst:
- einen Stapel, der eine erste Elektrode (14), eine Elektrolytmembran (4) mit einer Vorder- und einer Rückseite (4a, 4b) und eine zweite Elektrode (16) umfasst,
- und einen ersten und zweiten in den Stapel integrierten Stromkollektor (13, 15), die jeweils der ersten und zweiten Elektrode (14, 16) entsprechen, wobei jeder Stromkollektor eine metallische Beschichtung hat und mit einer Mehrzahl transversaler Durchlässe für ein Fluid versehen ist,
Brennstoffzelle, die **dadurch gekennzeichnet ist, dass** der erste und zweite Stromkollektor (13, 15) jeweils auf der Vorder- und Rückseite (4a, 4b) des Elektrolytmembrans (4), zwischen dem Elektrolytmembran (4) und der entsprechenden Elektrode (14, 16) angeordnet sind, und dass der erste und zweite Stromkollektor (13, 15) porös sind, wobei die transversalen Durchlässe von den Poren der Stromkollektoren (13, 15) gebildet werden.

2. Brennstoffzelle nach Anspruch 1, **dadurch gekennzeichnet, dass** der erste und zweite Stromkollektor (13, 15) jeweils in Form eines Gitters strukturiert sind.

3. Brennstoffzelle nach Anspruch 1, **dadurch gekennzeichnet, dass** der erste und zweite Stromkollektor (13, 15) jeweils in Form eines Kamms strukturiert sind.

4. Brennstoffzelle nach einem der Ansprüche 1 bis 3, **dadurch gekennzeichnet, dass** das Metall des ersten und zweiten Stromkollektors (13, 15) ein Edelmetall ist.

## Patentansprüche (Patentansprüche für folgende(n) Vertragsstaat(en): AT, BE, BG, CH, CY, CZ, DK, EE, ES, FI, GR, HU, IE, IT, LI, LU, MC, PL, PT, RO, SE, SI, SK, TR)

1. Brennstoffzelle, die umfasst:
- einen Stapel, der eine erste Elektrode (14), eine Elektrolytmembran (4) mit einer Vorder- und einer Rückseite (4a, 4b) und eine zweite Elektrode (16) umfasst,
- und einen ersten und zweiten in den Stapel integrierten Stromkollektor (13, 15), die jeweils der ersten und zweiten Elektrode (14, 16) entsprechen, wobei jeder Stromkollektor eine metallische Beschichtung hat und mit einer Mehrzahl transversaler Durchlässe für ein Fluid versehen ist,
Brennstoffzelle, die **dadurch gekennzeichnet ist, dass** der erste und zweite Stromkollektor (13, 15) jeweils auf der Vorder- und Rückseite (4a, 4b) des Elektrolytmembrans (4), zwischen dem Elektrolytmembran (4) und der entsprechenden Elektrode (14, 18) angeordnet sind.

2. Brennstoffzelle nach Anspruch 1, **dadurch gekennzeichnet, dass** der erste und zweite Stromkollektor (13, 15) jeweils in Form eines Gitters strukturiert sind.

3. Brennstoffzelle nach Anspruch 1, **dadurch gekennzeichnet, dass** der erste und zweite Stromkollektor (13, 15) jeweils in Form eines Kamms strukturiert sind.

4. Brennstoffzelle nach einem der Ansprüche 1 bis 3, **dadurch gekennzeichnet, dass** der erste und zweite Stromkollektor (13, 15) porös sind, wobei die transversalen Durchlässe von den Poren der Stromkollektoren (13, 15) gebildet werden.

5. Brennstoffzelle nach einem der Ansprüche 1 bis 3, **dadurch gekennzeichnet, dass** der erste und zweite Stromkollektor (13, 15) jeweils einen Wechsel von porösen Bereiche und nicht porösen Bereiche aufweisen, wobei die transversalen Durchlässe von den Poren der porösen Bereiche bebildet werden.

6. Brennstoffzelle nach einem der Ansprüche 1 bis 5, **dadurch gekennzeichnet, dass** das Metall des ersten und zweiten Stromkollektors (13, 15) ein Edelmetall ist.

## Claims (Claims for the following Contracting State(s): DE, FR, GB, NL)

1. Fuel cell comprising:
- a stack comprising a first electrode (14), an electrolytic membrane (4) provided with front and rear faces (4a, 4b), and a second electrode (16),
- and first and second current collectors (13, 15) integrated in the stack and respectively corresponding to the first and second electrodes (14, 16), each current collector comprising a metallic deposit and being provided with a plurality of transverse passages for passage of a fluid,
cell **characterized in that** the first and second current collectors (13, 15) are respectively arranged on the front and rear faces (4a, 4b) of the electrolytic membrane (4), between the electrolytic membrane (4) and the corresponding electrode (14, 16) and **in that** the first and second current collectors (13, 15) are porous, the transverse passages being formed by the pores of the current collectors (13, 15).

2. Fuel cell according to claim 1, **characterized in that** the first and second current collectors (13, 15) are both structured in the form of a grid.

3. Fuel cell according to claim 1, **characterized in that** the first and second current collectors (13, 15) are both structured in the form of a comb.

4. Fuel cell according to any one of the claims 1 to 5, **characterized in that** the metal of first and second current collectors (13, 15) is chosen from noble metals.

## Claims (Claims for the following Contracting State(s): AT, BE, BG, CH, CY, CZ, DK, EE, ES, FI, GR, HU, IE, IT, LI, LU, MC, PL, PT, RO, SE, SI, SK, TR)

1. Fuel cell comprising:
- a stack comprising a first electrode (14), an electrolytic membrane (4) provided with front and rear faces (4a, 4b), and a second electrode (16),
- and first and second current collectors (13, 15) integrated in the stack and respectively corresponding to the first and second electrodes (14, 16), each current collector comprising a metallic deposit and being provided with a plurality of transverse passages for passage of a fluid,
cell **characterized in that** the first and second current collectors (13, 15) are respectively arranged on the front and rear faces (4a, 4b) of the electrolytic membrane (4), between the electrolytic membrane (4) and the corresponding electrode (14, 16).

2. Fuel cell according to claim 1, **characterized in that** the first and second current collectors (13, 15) are both structured in the form of a grid.

3. Fuel cell according to claim 1, **characterized in that** the first and second current collectors (13, 15) are both structured in the form of a comb.

4. Fuel cell according to any one of the claims 1 to 3, **characterized in that** the first and second current collectors (13, 15) are porous, the transverse passages being formed by the pores of the current collectors (13, 15).

5. Fuel cell according to any one of the claims 1 to 3, **characterized in that** the first and second current collectors (13, 15) each comprise an alternation of porous zones and non-porous zones, the transverse passages being formed by the pores of the porous zones.

6. Fuel cell according to any one of the claims 1 to 5, **characterized in that** the metal of first and second current collectors (13, 15) is chosen from noble metal.
